# EUROPEAN PATENT APPLICATION

(11) **EP 4 468 480 A2**
(43) Date of publication of application: **27.11.2024**
(21) Application number: 23807875.2
(22) Date of filing: 16.05.2023
(51) Int. Cl.: H01M 50/242, H01M 50/204, H01M 50/264

(54) **BATTERY MODULE AND BATTERY PACK**

(30) Priority: 16.05.2022 KR 20220059707
(71) Applicant: LG Energy Solution, Ltd., Seoul 07335 (KR)
(72) Inventor: LEE, Jae Hyun, Daejeon 34122 (KR); SHIN, Ju Hwan, Daejeon 34122 (KR); LEE, Hyoung Suk, Daejeon 34122 (KR)
(74) Representative: Plasseraud IP
(86) International application number: PCT/KR2023/006612
(87) International publication number: WO 2023/224356

(57) **Abstract**

Discussed is a battery module and a battery pack including the battery module. In more detail, the battery module may include a plurality of cells that are stacked and may include a pair of reinforcement plates that are coupled to opposite sides of the battery module and support side surfaces of the battery module, wherein each pair of the reinforcement plates includes a plurality of reinforcement ribs protruding and extending in a longitudinal direction of a reinforcement plate of the pair of reinforcement plates.

## Description

### [Cross-reference to Related Application]

This application claims the benefit of priority based on Korean Patent Application No. 10-2022-0059707, filed on May 16, 2022, and the entire contents of the Korean patent application are incorporated herein by reference.

### [Technical Field]

The present disclosure relates to a battery module and a battery pack.

### [Background Art]

Types of secondary batteries include lithium ion batteries, lithium polymer batteries, nickel cadmium batteries, nickel hydrogen batteries, and nickel zinc batteries. An operating voltage of these unit secondary battery cells, that is, unit battery cells, is in the range of about 2.5 V to 4.2 V. Thus, when a higher output voltage is required, a battery pack is formed by connecting a plurality of battery cells in series. Further, a battery pack may be formed by connecting aplurality of battery cells in parallel according to a charging/discharging capacity required for the battery pack. Thus, the number of battery cells included in the battery pack may be variously set according to a required output voltage and a required charging/discharging capacity.

For example, when abattery pack is formed by connecting aplurality of battery cells in series or parallel, a battery module including the plurality of battery cells is first formed.

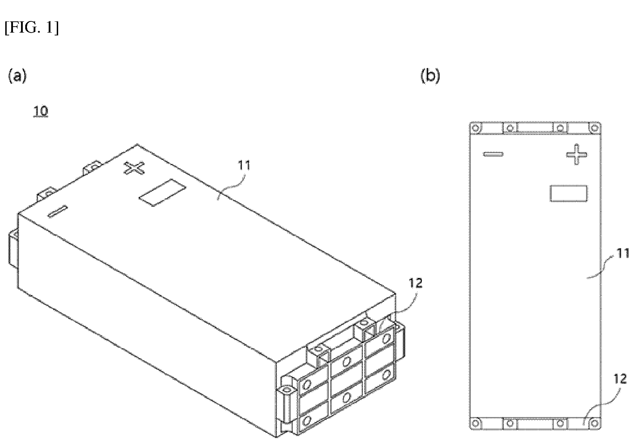

FIG. 1 is a view illustrating one type of commonly used battery module 10. As illustrated, the battery module 10 according to the related art has a shape in which the battery module 10 has end plates 12 coupled to front and rear sides thereof and side surfaces thereof are surrounded and protected by a module frame 11.

A common method of forming a battery pack includes using a plurality of battery modules 10 and adding other components.

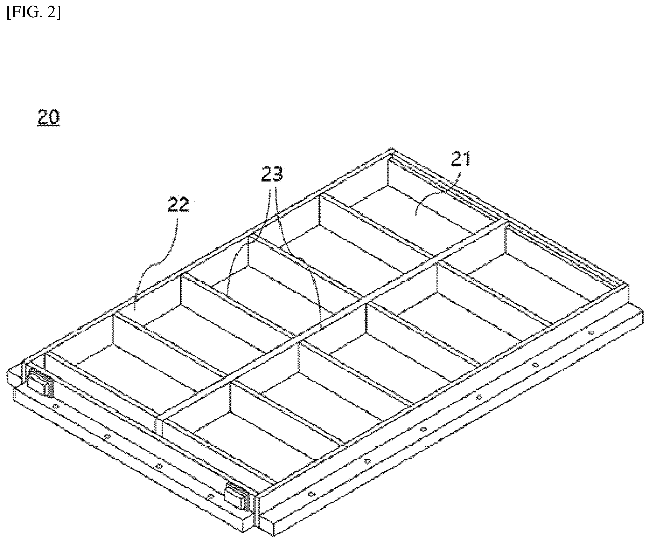

FIG. 2 is a view illustrating a pack case 20 that provides a space, in which the battery module 10 is accommodated, among common battery packs. A lower portion of each battery module 10 is supported by a base plate 21 in a space partitioned by a side wall 22 and a partition wall 23 in the pack case 20 illustrated in FIG. 2, and thus the battery module 10 is electrically connected to other battery modules 10 in series or parallel.

Meanwhile, an abnormal phenomenon may occur in the battery module included in the battery pack during a charging or discharging process, and one example thereof is a swelling phenomenon. The swelling phenomenon is a phenomenon in which a battery cell expands due to gas generated inside the battery cell. The swelling phenomenon may first progress in each battery cell unit accommodated in the battery module, consequently affecting the battery module.

In particular, the swelling phenomenon may progress throughout a central portion of the battery module, that is, the entire module frame. Generally, a portion of the module frame of each battery module accommodated in a pack case is not a particularly fixed portion, and thus when the swelling phenomenon severely occurs, the swelling phenomenon may affect adjacent battery modules.

Thus, there is a need for a novel method capable of minimizing shape deformation of the battery module as much as possible even when the swelling phenomenon occurs in each battery module accommodated in the pack case.

### [Related Art Document]

Korean Patent Application Publication No. 10-2018-0113906

### [Disclosure]

### [Technical Problem]

Thus, an aspect of the present disclosure is to provide a structure capable of reinforcing a side surface of a battery module.

Further, another aspect of the present disclosure is to suppress a swelling phenomenon of the battery module accommodated in a pack case.

Other purposes and advantages of the present disclosure may be understood withthe following description and may be more clearly understood with aspects of the present disclosure. Further, it will be readily apparent that the purposes and advantages of the present disclosure may be implemented by units and combinations thereof described in the appended claims.

### [Technical Solution]

A battery module including a cell stack in which a plurality of cells are stacked includes a pair of reinforcement plates that are coupled to opposite sides of the battery module and support side surfaces of the battery module, wherein each of the pair of reinforcement plates includes a plurality of reinforcement ribs protruding and extending in a longitudinal direction of a reinforcement plate of the plurality of reinforcement plates.

The plurality of reinforcement ribs may be spaced a predetermined distance from each other in the longitudinal direction of the reinforcement plate.

The reinforcement plate may include a reinforcement groove having a recessed shape and provided between a pair of reinforcement ribs of the plurality of reinforcement ribs spaced apart from each other in the longitudinal direction of the reinforcement plate.

A shape of the reinforcement groove may correspond to a shape of a reinforcement rib of the reinforcement ribs such that the reinforcement rib isengaged with and inserted into the reinforcement groove.

The reinforcement rib and the reinforcement groove may be alternately formed in the longitudinal direction of the reinforcement plate.

The reinforcement rib may have at least one of a trapezoidal shape and a parabolic shape.

The plurality of reinforcement ribs may be spaced a predetermined distance from each other in a height direction of the reinforcement plate.

The plurality of reinforcement plates may include a first reinforcement plate provided on one side of the battery module, and a second reinforcement plate provided on another side of the battery module, and the plurality of reinforcement ribs included in the first reinforcement plate and the second reinforcement plate may be formed at a same height in the height direction of the plurality of reinforcement plates.

The reinforcement plate may include a through hole perforated to perpendicularly pass through a reinforcement rib of the plurality of reinforcement rib.

The reinforcement plate may further include a reinforcement bar extending perpendicularly through a reinforcement rib of the plurality of reinforcement ribs.

The reinforcement bar may include a reinforcement hole perforated so that a bolt perpendicularlypasses through the reinforcement hole.

A battery pack includes the battery module, and a pack case including a module area in which the battery module is accommodated, wherein the plurality of reinforcement plates include a first reinforcement plate provided on one side of the battery module, and a second reinforcement plate provided on another side of the battery module, and the first reinforcement plate included in one battery module among a pair of battery modules arranged adjacent to the module area of the pack case is coupled to the second reinforcement plate of another battery module among the pair of battery modules.

The plurality of reinforcement ribs may be spaced a predetermined distance from each other in the longitudinal direction of the reinforcement plate, the reinforcement plate may include reinforcement grooves having a recessed shape and provided between a pair of reinforcement ribs among the plurality of reinforcement ribs spaced apart from each other in the longitudinal direction of the reinforcement plate, the reinforcement rib and the reinforcement groove may be alternately formed in the longitudinal direction of the reinforcement plate, and the reinforcement rib included in the first reinforcement plate of the one battery module among the pair of battery modules may be inserted into and engaged with the reinforcement groove included in the second reinforcement plate of the another battery module.

The reinforcement plate may further include a reinforcement bar extending perpendicularly through the reinforcement rib, the reinforcement bar may include a reinforcement hole perforated such that a bolt perpendicularlypasses through the reinforcement hole, the pack case may include a coupling groove formed at a bottom of the module area to correspond to a position of the reinforcement hole, and the battery module may be coupled to the pack case by the bolt passing through the reinforcement hole and inserted into the coupling groove.

The reinforcement plate may include a through hole perforated to perpendicularlypass through the reinforcement rib, the pack case may include a coupling groove formed at a bottom of the module area to correspond to a position of the through hole, and the battery module may be coupled to the pack case by a bolt passing through the through hole and inserted into the coupling groove.

The pack case may include a base plate corresponding to a bottom portion, and a side wall perpendicularly coupled to an end of the base plate and extending along an edge of the base plate, the reinforcement plate may include an auxiliary coupling hole at opposite ends thereof, the auxiliary coupling hole being perforated such that the bolt passes through in a horizontal direction, the side wall may include an auxiliary coupling groove formed to correspond to a position of the auxiliary coupling hole of the battery module disposed in the module area, and the battery module may be coupled to the pack case by a bolt passing through the auxiliary coupling hole and inserted into the auxiliary coupling groove.

The reinforcement plate may include a semi-circular recess to accommodate one end of the bolt at a top side of the reinforcement plate.

The plurality of reinforcement ribs may be aligned and overlapped with each other in the height direction.

A battery may include a cell stack including a plurality of cells that are stacked; and a plurality of reinforcement plates coupled to sides of the cell stack and configured to support side surfaces of the plurality of battery cells, wherein each reinforcement plate includes at least one reinforcement rib protruding from each reinforcement plate in a direction away from the cell stack.

The battery may further include a bolt that extends in a height direction of the cell stack, and coupled to the at least one reinforcement rib.

### [Advantageous Effects]

According to the present disclosure, a swelling phenomenon of a battery module accommodated in a pack case may be suppressed.

Further, the present disclosure may improve the assembly efficiency of the pack case by removing, from the pack case, a separate side wall componentthat separates the battery module.

### [Brief Description of the Drawings]

FIG. 1, including (a) and (b), is a view illustrating a battery module according to the related art.
FIG. 2 is a view illustrating a pack case according to the related art.
FIG. 3, including (a) and (b), is a perspective view of a battery module according to a first aspect of the present disclosure.
FIG. 4 is a plan view of the battery module according to the first aspect of the present disclosure.
FIG. 5 is a view illustrating bolts inserted into a through hole and an auxiliary coupling hole of a reinforcement plate included in the battery module of FIG. 3.
FIG. 6 is a view illustrating a pack case included in a battery pack according to the first aspect of the present disclosure.
FIG. 7 is a plan view of a pair of battery modules arranged adjacent to each other according to the first aspect of the present disclosure.
FIG. 8, including (a) and (b), is a perspective view ofthe pair of battery modules illustrated in FIG. 7.
FIG. 9 is a perspective view of a pair of coupled battery modules according to the first aspect of the present disclosure.
FIG. 10 is a view illustrating the battery pack according to the first aspect in which the battery module according to the first aspect is accommodated.
FIG. 11, including (a) and (b), is a perspective view of a battery module according to a second aspect of the present disclosure.
FIG. 12 is a view illustrating bolts inserted into a reinforcement hole and an auxiliary coupling hole of a reinforcement plate included in the battery module of FIG. 11.
FIG. 13, including (a) and (b), is a perspective view of a pair of battery modules arranged adjacent to each other according to the second aspect of the present disclosure.
FIG. 14 is a perspective view of a pair of coupled battery modules according to the second aspect of the present disclosure.
FIG. 15 is a view illustrating the battery pack according to the second aspect in which the battery module according to the second aspect is accommodated.

### [Detailed Description of the Preferred Embodiments]

Hereinafter, exemplary aspects of the present disclosure will be described in detail with reference to the accompanying drawings. Prior to this, terms or words used in the present specification and the appended claims should not be interpreted as being limited to usual or dictionary meanings and should be interpreted as meanings and concepts corresponding to the technical spirit of the present disclosure according to the principle that the inventor may properly define the concepts of the terms in order to describe his/her own disclosure in the best way.

Thus, since the aspects described in the present specification and configurations illustrated in the drawings are merely the most exemplary aspects of the present disclosure and do not represent all the technical spirit of the present disclosure, it should be understood that there may be various equivalents and variations that may replace the aspects and the configurations at the time of filing the present application.

Further, in description of the present disclosure, when it is determined that the detailed description of widely known related configurations or functions may obscure the gist of the present disclosure, the detailed description will be omitted.

Since the aspects of the present disclosure are provided to more completely describe the present disclosure to those skilled in the art, the shapes and sizes of components in the drawings may be exaggerated, omitted, or schematically illustrated for clearer description. Thus, the size or ratio of each component does not entirely reflect theactual size or ratio.

The present disclosure relates to a battery module including a cell stack in which a plurality of cells are stacked and a battery pack including the same.

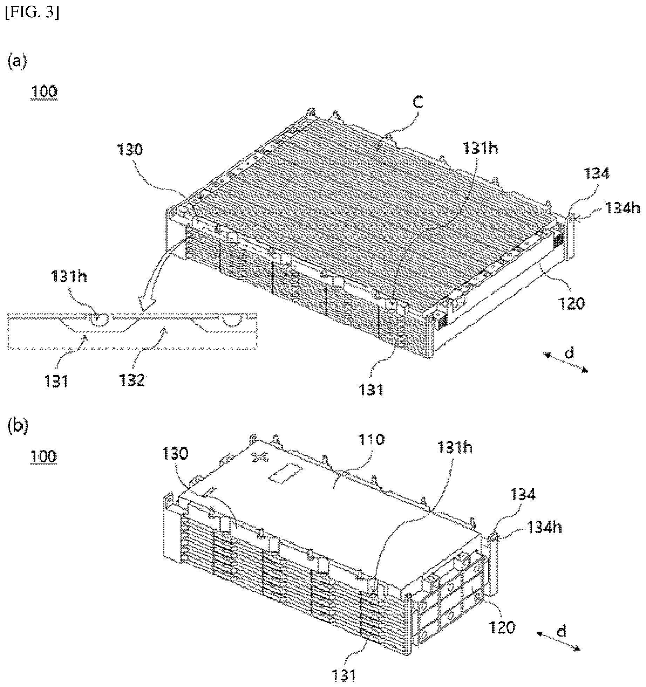

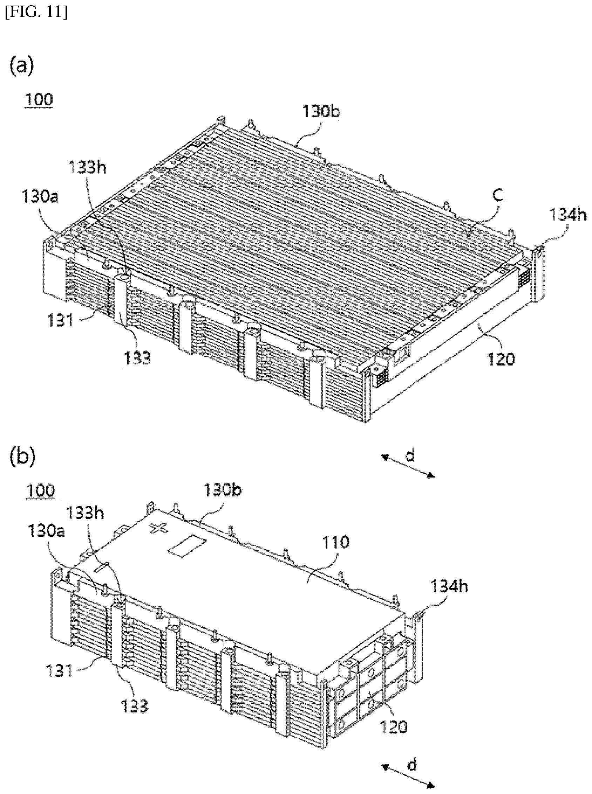

FIGS. 3 to 10 relate to a battery module according to a first aspect of the present disclosure and a battery pack including the same, and FIGS. 11 to 15 relate to a battery module according to a second aspect of the present disclosure and a battery pack including the same.

Hereinafter, the battery module and the battery pack of the present disclosure will be described according to each aspect with reference to the accompanying drawings.

### (First Aspect)

### Battery Module 100

FIG. 3, including (a) and (b), is a perspective view of a battery module 100 according to the first aspect of the present disclosure.

As illustrated in (a) of FIG. 3, the battery module 100 of the present disclosure includes a cell stack C, end plates 120 coupled to front and rear sides of the cell stack, and a pair of reinforcement plates 130 coupled to both sides thereof. Alternatively, as illustrated in (b) of FIG. 3, the battery module 100 may further include a module frame 110 surrounding the side surfaces and the upper and lower surfaces of the cell stack.

(Hereinafter, a basic structure of the battery module 100 according to the first aspect will be described using the form of (a) of FIG. 3.)
The reinforcement plate 130 serves to support a side surface of the battery module 100 and fix the battery module 100 to a pack case 200 when the battery module 100 is accommodated in the battery pack.

The reinforcement plates 130 may be coupled to the end plates having both ends coupled to the front and rear sides of the battery module 100 and support the battery module 100 while in contact with the entire side surface of the battery module 100. In this case, the reinforcement plate 130 may be screw-coupled and fixed to a side surface of the end plate 120 using a separate bolt B or the like and may be fixed with an adhesive.

As illustrated in FIG. 3, the reinforcement plate 130 includes a plurality of protruding reinforcement ribs 131.

The reinforcement rib 131 has a shape extending in a longitudinal direction d of the reinforcement plate 130 and may have a trapezoidal shape having slopes formed on both sides thereof or a parabolic shape (not illustrated).

The reinforcement ribs 131 are spaced a predetermined distance from each other in the longitudinal direction d of the reinforcement plate 130. Further, the reinforcement plate 130 includes reinforcement grooves 132 formed by inclined surfaces of the reinforcement ribs 131 between the reinforcement ribs 131 arranged adjacent to each other in the longitudinal direction d. In this case, the reinforcement grooves 132 may have the same shape as the reinforcement ribs 131 so that the reinforcement ribs 131 may be engaged with and inserted into the reinforcement grooves 132. For example, when the reinforcement ribs 131 have a trapezoidal shape, the reinforcement grooves 132 also have a trapezoidal shape.

The reinforcement ribs 131 and the reinforcement grooves 132 may be alternately formed in the longitudinal direction d of the reinforcement plate 130.

Further, as illustrated in FIG. 3, the reinforcement ribs 131 are spaced a predetermined distance from each other in a height direction of the reinforcement plate 130. That is, the reinforcement ribs 131 are spaced a predetermined distance from each other on the side surface of the battery module 100 in the longitudinal direction d and the height direction of the reinforcement plate 130.

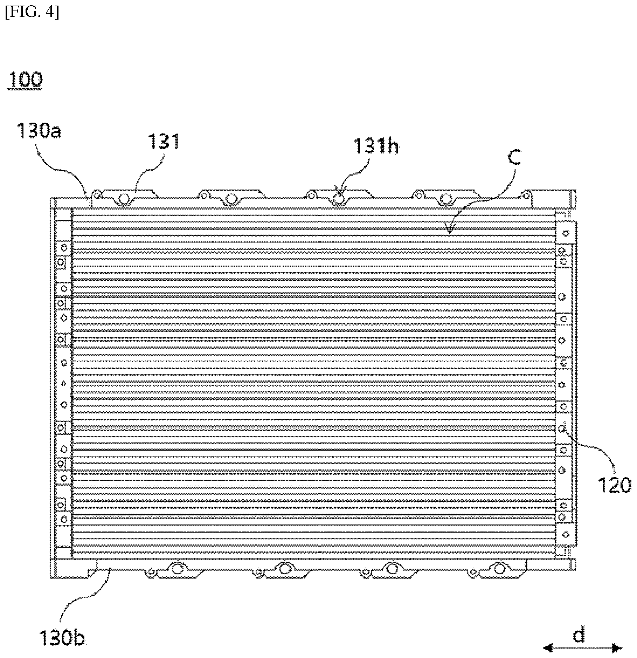

FIG. 4 is a plan view of the battery module 100 according to the first aspect of the present disclosure.

As illustrated in FIG. 4, the reinforcement plates 130 coupled to both sides of the battery module 100 of the present disclosure include a first reinforcement plate 130a provided on one side of the battery module 100 and a second reinforcement plate 130b provided on the other side of the battery module 100.

The reinforcement ribs 131 formed on the first reinforcement plate 130a and the second reinforcement plate 130b are formed at heights that are symmetrical to each other in the height direction of the reinforcement plate 130 but are formed at positions misaligned from each other in the longitudinal direction d of the reinforcement plate 130. For example, the reinforcement ribs 131 of the first reinforcement plate 130a and the reinforcement groove 132 of the second reinforcement plate 130b are positioned to be symmetrical to each other.

As illustrated in FIG. 3, the battery module 100 according to the first aspect of the present disclosure includes through holes 131h perforated to perpendicularly pass through the reinforcement ribs 131.

The through holes 131h are formed at the same position in the reinforcement ribs 131. For example, the through holes 131h included in the reinforcement ribs 131 formed in the height direction of the reinforcement plate 130 at the same position in the longitudinal direction d of the reinforcement plate 130 are formed at positions corresponding to each other.

One bolt B may be inserted into each of the through holes 131h formed at the same position in the longitudinal direction d of the reinforcement plate 130, and the reinforcement plate 130 may be screw-coupled to the bolt B inserted into the through hole 131h.

The battery module 100 of the present disclosure may be primarily supported by the reinforcement plate 130 coupled to the side surface thereof, and the side surface of the battery module 100 may be triply supported by the reinforcement ribs 131 formed on the reinforcement plate 130 and the bolts B inserted into the through holes 131h of the reinforcement ribs 131.

As illustrated in FIG. 3, the reinforcement plate 130 includes protrusions 134 that protrude upward from both ends thereof and auxiliary coupling holes 134h perforated to pass through the protrusions 134 in a horizontal direction.

A bolt B may be inserted into the auxiliary coupling hole 134h, and the reinforcement plate 130 may be screw-coupled to the bolt B inserted into the auxiliary coupling hole 134h.

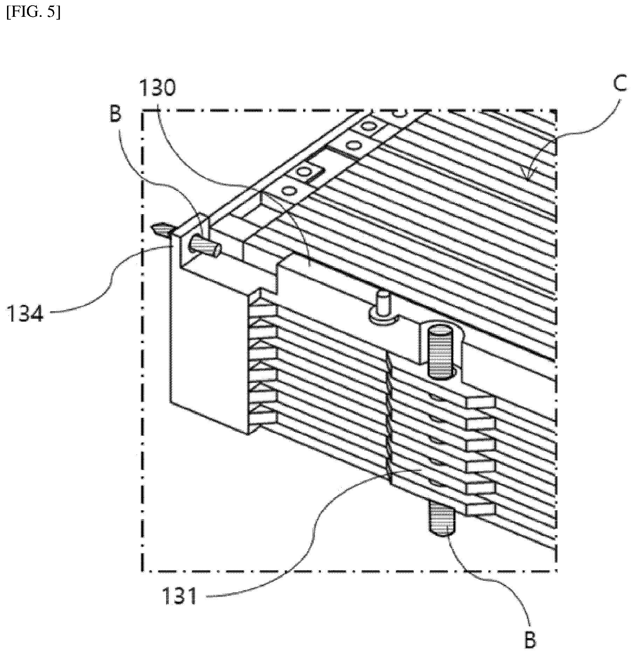

FIG. 5 is a view illustrating bolts B inserted into the through hole 131h and the auxiliary coupling hole 134h of each reinforcement plate 130 coupled to both sides of the battery module 100 of FIG. 3. (However, for convenience, a detailed structure such as the thread of the bolt B is omitted.)

Referring to FIG. 5, one bolt B is inserted into and coupled to the through hole 131h of each of the reinforcement ribs 131 formed at the same position in the longitudinal direction d of the reinforcement plate 130.

Further, another bolt B is inserted into and coupled to, in the horizontal direction, the auxiliary coupling hole 134h formed at an end of the reinforcement plate 130.

The battery module 100 of the present disclosure may be fixed to the pack case 200 included in the battery pack by the bolts B inserted into and coupled to the through hole 131h and the auxiliary coupling hole 134h.

### Battery Pack

The battery pack according to the first aspect of the present disclosure includes the battery module 100 according to the first aspect of the present disclosure and the pack case 200 including a module area A in which the battery module 100 is accommodated.

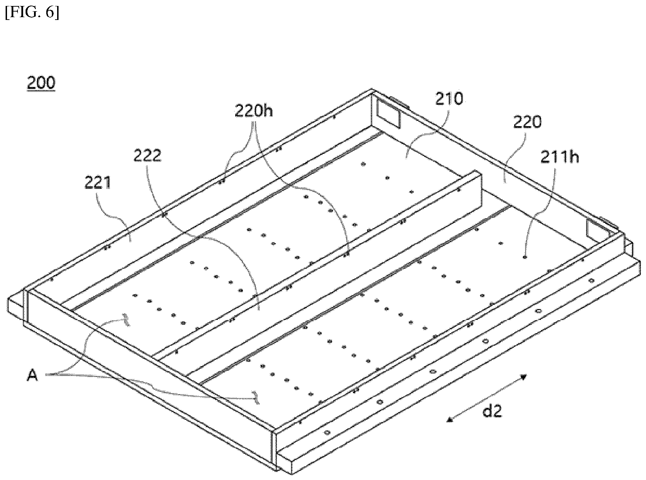

FIG. 6 is a view illustrating the pack case 200 included in the battery pack according to the first aspect of the present disclosure.

The pack case 200 includes a base plate 210 corresponding to a bottom portion and a side wall 220 perpendicularly coupled to the base plate 210.

The side wall 220 includes a main side wall 221 perpendicularly coupled to the base plate 210 at an edge of the base plate 210 and a sub-side wall 222 perpendicularly coupled to the base plate 210 to cross the center of the base plate 210. Thus, the module area A included in the pack case 200 of the present disclosure may be roughly divided into two parts by the sub-side wall 222, and the battery modules 100 arranged in one module area A may be arranged side by side between the sub-side wall 222 and the main side wall 221 opposite to the sub-side wall 222 in a longitudinal direction d2 of the pack case 200.

A coupling groove 211h may be formed in a lower portion of the base plate 210 so that the bolt B may be inserted into and screw-coupled to the coupling groove 211h, and an auxiliary coupling groove 220h may be formed in the side wall 220 so that the bolt B may be inserted into and screw-coupled to the auxiliary coupling groove 220h.

Among the plurality of battery modules 100 accommodated in the module area A of the pack case 200, a pair of battery modules 100 arranged adjacent to each other are coupled to each other by reinforcement plates 130. In more detail, among the pair of battery modules 100 arranged adjacent to the module area A of the pack case 200, a first reinforcement plate 130a included in one battery module 100 is coupled to a second reinforcement plate 130b of the other battery module 100.

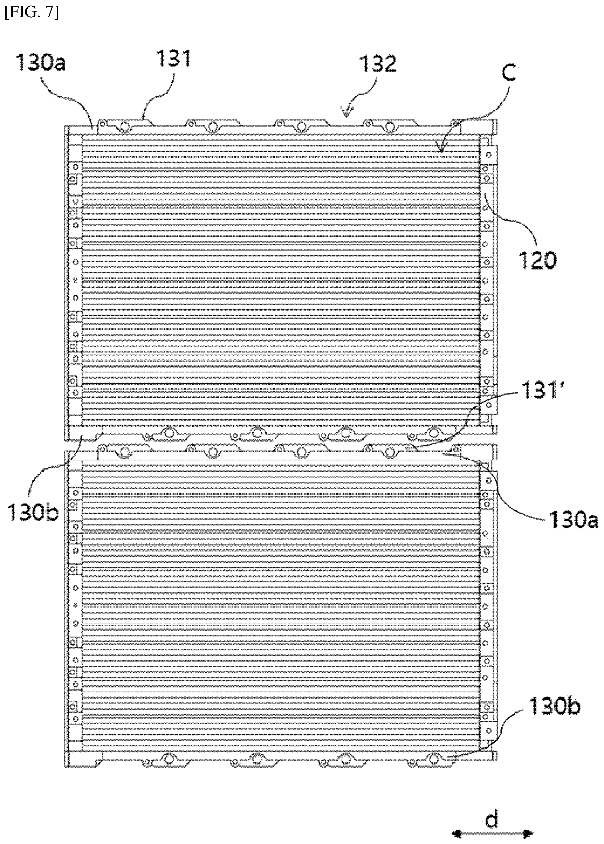

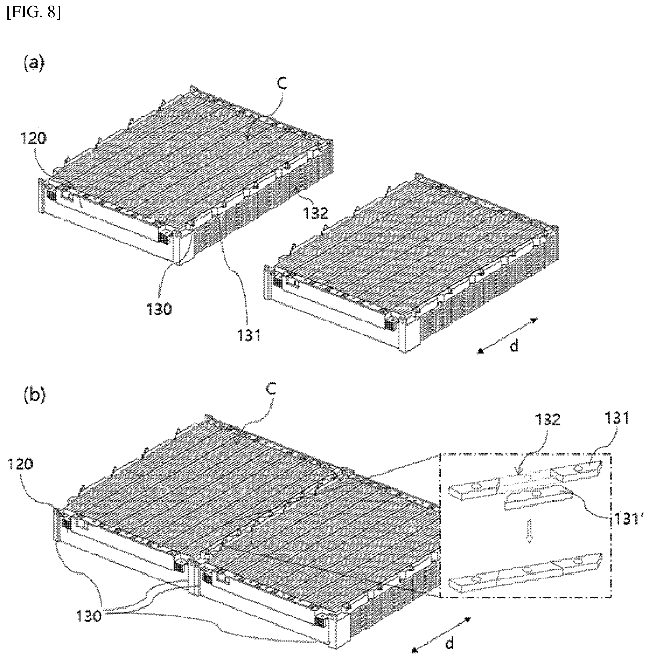

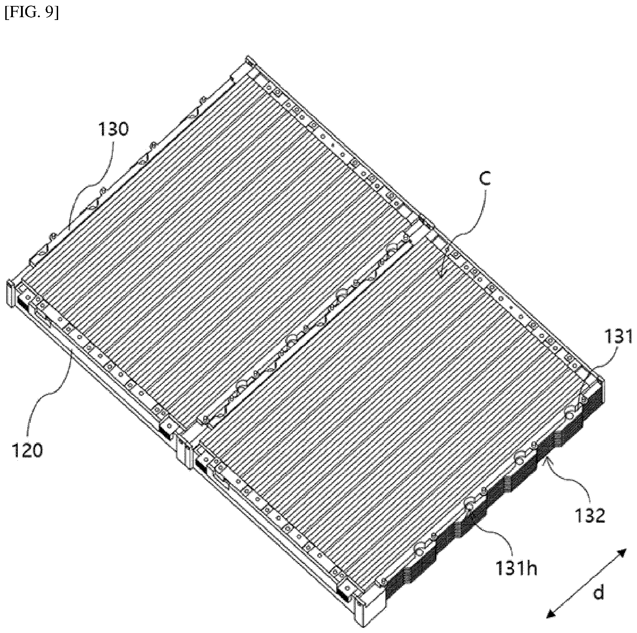

FIG. 7 is a view illustrating a pair of battery modules 100 arranged adjacent to each other, (a) of FIG. 8 is a perspective view of the pair of battery modules 100 illustrated in FIG. 7, (b) of FIG. 8 is a perspective view ofthe pair of coupled battery modules 100, and FIG. 9 is a view illustrating the pair of battery modules 100 illustrated in (b) of FIG. 8 from a different angle.

According to FIGS. 7 to 9, the pair of battery modules 100 arranged adjacent to each other in the module area A of the pack case 200 are arranged such that the reinforcement ribs 131 of one battery module 100 face the reinforcement grooves 132 of the other battery module 100 as illustrated in FIG. 7.

In detail, one battery module 100 among the adjacent battery modules 100 is disposed such that the first reinforcement plate 130a provided on one side of the one battery module 100 faces the second reinforcement plate 130b provided on one side of the other battery module 100.

The pair of battery modules 100 arranged as illustrated in FIGS. 7 and (a) of FIG. 8, are coupled to each other as the reinforcement ribs 131 provided on one side of the one battery module 100 are engaged with and inserted into the reinforcement grooves 132 provided on one side of the other facing battery module 100. Thus, a plurality of battery modules 100 coupled as illustrated in (b) of FIG. 8 may be inserted into the module area A of the pack case 200 of FIG. 6.

As illustrated in (b) of FIG. 8 and 9, the reinforcement ribs 131 between the pair of coupled battery modules 100 are engaged with the corresponding reinforcement grooves 132 to form a stripshape extending in the longitudinal direction d of the reinforcement plate 130. That is, a reinforcement rib 131' formed on one side of one battery module 100 is inserted into the reinforcement groove 132 formed on one side of the other battery module 100 disposed adjacent thereto, so that the opposing reinforcement ribs 131 and reinforcement plates 130 are pressed and supported. Thus, a side surface of the cell stack included in each battery module 100 may be supported by the reinforcement ribs 131 that form one strip shape by coupling the first reinforcement plate 130a and the second reinforcement plate 130b.

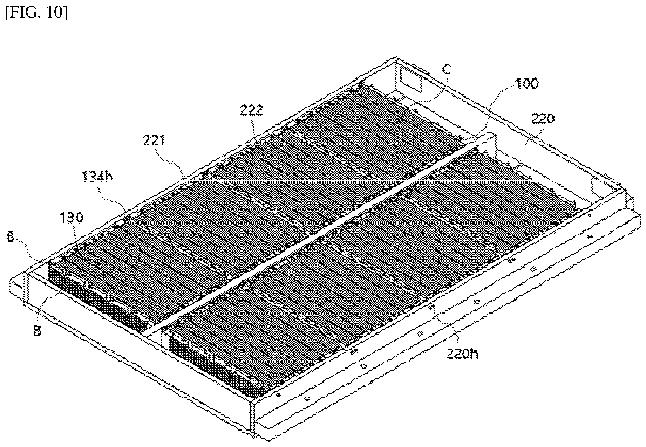

FIG. 10 is a view illustrating the battery pack according to the first aspect in which the battery module 100 is accommodated in the module area A of the pack case 200.

The plurality of battery modules 100 are accommodated in the module area A so that the through holes 131h formed in the reinforcement ribs 131 of the reinforcement plate 130 correspond to the coupling grooves 211h of the base plate 210 illustrated in FIG. 6. In this case, the battery module 100 may be fixedly coupled to the base plate 210 by the bolt B that perpendicularly passes through the through hole 131h and is inserted into the coupling groove 211h. The bolts B may be screw-coupled to positions where the reinforcement ribs 131 are formed while spaced a predetermined distance from each other along the side surface of the battery module 100, and the side surface of the battery module 100 may be supported by the bolts B. The bolt B inserted into the through hole 131h allows the reinforcement plates 130 coupled to both sides of the battery module 100 to be fixed to the base plate 210. Thus, even when gas is generated inside any one battery module 100, a swelling phenomenon in which the battery module 100 expands may be suppressed by the bolt B coupled to the side surface and the reinforcement plate130 coupled to the base plate 210 by the bolt B.

The battery module 100 may be accommodated in the module area A such that the auxiliary coupling hole 134h of the reinforcement plate 130 corresponds to the auxiliary coupling groove 220h of the side wall 220 illustrated in FIG. 6. In this case, the battery module 100 may be fixedly coupled to the side wall 220 by the bolt B that horizontally passes through the auxiliary coupling hole 134h and is inserted into the auxiliary coupling groove 220h. Thus, each battery module 100 accommodated in the module area A of the pack case 200 may be fixedly coupled to and supported by the side wall 220 as well as the base plate 210 by the reinforcement plate 130.

The battery pack of the present disclosure may further include an upper cover (not illustrated) coupled to the pack case 200 to cover an upper portion of each battery module 100 accommodated in the module area A of the pack case 200.

Since the upper cover corresponds to widely-known technology, a more detailed description thereof will be omitted.

### (Second Aspect)

### Battery Module 100

FIG. 11 is a perspective view of a battery module 100 according to a second aspect of the present disclosure.

As illustrated in (a) of FIG. 11, the battery module 100 of the present disclosure includes a cell stack, end plates 120 coupled to the front and rear sides of the cell stack, and a pair of reinforcement plates 130 coupled to both sides thereof. Alternatively, as illustrated in (b) of FIG. 11, the battery module 100 may further include a module frame 110 surrounding the side surfaces and the upper and lower surfaces of the cell stack.

(Hereinafter, a basic structure of the battery module 100 according to the second aspect will be described using the form of (a) of FIG. 11.)

The reinforcement plate 130 serves to support the side surface of the battery module 100 and to fix the battery module 100 to the pack case 200 when the battery module 100 is accommodated in the battery pack.

The reinforcement plates 130 may be coupled to the end plates having both ends coupled to the front and rear sides of the battery module 100 and support the battery module 100 while in contact with the entire side surface of the battery module 100. In this case, the reinforcement plate 130 may be screw-coupled and fixed to the side surface of the end plate 120 using aseparate bolt B or the like and may be fixed with an adhesive.

As illustrated in FIG. 11, the reinforcement plate 130 includes a plurality of protruding reinforcement ribs 131.

The reinforcement rib 131 has a shape extending in the longitudinal direction d of the reinforcement plate 130 and may have a trapezoidal shape having slopes formed on both side surfaces thereof or a parabolic shape (not illustrated).

The reinforcement ribs 131 are spaced a predetermined distance from each other in the longitudinal direction d of the reinforcement plate 130. Further, the reinforcement plate 130 includes reinforcement grooves 132 formed by inclined surfaces of the reinforcement ribs 131 between the reinforcement ribs 131 arranged adjacent to each other in the longitudinal direction d. In this case, the reinforcement grooves 132 may have the same shape as the reinforcement ribs 131 so that the reinforcement ribs 131 may be engaged with and inserted into the reinforcement grooves 132. For example, when the reinforcement ribs 131 have a trapezoidal shape, the reinforcement grooves 132 also have a trapezoidal shape.

The reinforcement ribs 131 and the reinforcement grooves 132 may be alternately formed in the longitudinal direction d of the reinforcement plate 130.

Further, as illustrated in FIG. 11, the reinforcement ribs 131 are spaced a predetermined distance from each other in a height direction of the reinforcement plate 130. That is, the reinforcement ribs 131 are spaced a predetermined distance from each other on the side surface of the battery module 100 in the longitudinal direction d and the height direction of the reinforcement plate 130.

The reinforcement plates 130 coupled to both sides of the battery module 100 include a first reinforcement plate 130a provided on one side of the battery module 100 and a second reinforcement plate 130b provided on the other side of the battery module 100.

The reinforcement ribs 131 formed on the first reinforcement plate 130a and the second reinforcement plate 130b are formed at heights that are symmetrical to each other in the height direction of the reinforcement plate 130 but are formed at positions misaligned from each other in the longitudinal direction d of the reinforcement plate 130. For example, the reinforcement ribs 131 of the first reinforcement plate 130a and the reinforcement groove 132 of the second reinforcement plate 130b are positioned to be symmetrical to each other.

As illustrated in FIG. 11, the battery module 100 according to the second aspect of the present disclosure includes reinforcement bars 133 that extend perpendicularly through the reinforcement ribs 131.

The reinforcement bars 133 are spaced a predetermined distance from each other in the longitudinal direction d of the reinforcement plate 130 and may be formed at the same positions as the reinforcement ribs 131.

The reinforcement bar 133 includes a perpendicularly formed reinforcement hole 133h.

One bolt B may be inserted into the reinforcement hole 133h of the reinforcement bar 133, and the reinforcement plate 130 may be screw-coupled with the bolt B inserted into the reinforcement hole 133h.

The battery module 100 of the present disclosure may be primarily supported by the reinforcement plate 130 coupled to the side surface thereof and may be quadruply supported by the reinforcement ribs 131 formed on the reinforcement plate 130, the perpendicularly extending reinforcement bars 133, and the bolts B inserted into the reinforcement holes 133h of the reinforcement bars 133.

As illustrated in FIG. 11, the reinforcement plate 130 includes protrusions 134 that protrude upward from both ends thereof and auxiliary coupling holes 134h formed to pass through the protrusions 134 in the horizontal direction.

The bolt B may be inserted into the auxiliary coupling hole 134h, and the reinforcement plate 130 may be screw-coupled to the bolt B inserted into the auxiliary coupling hole 134h.

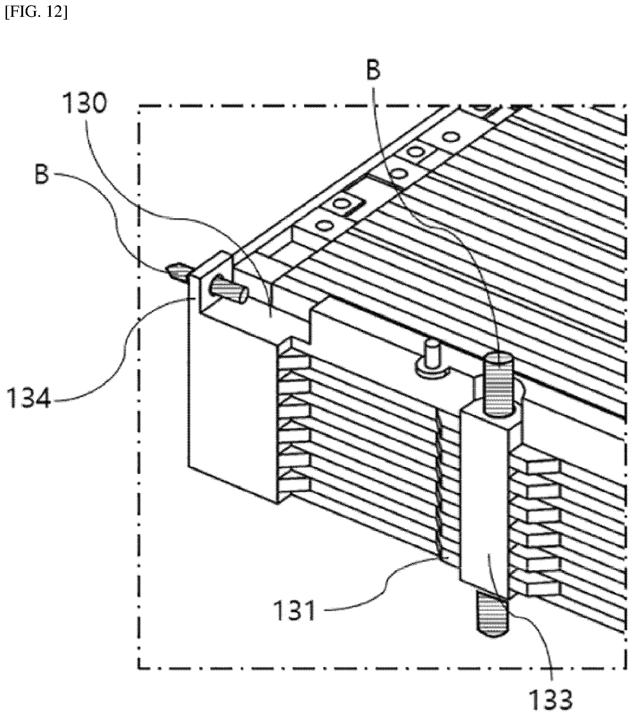

FIG. 12 is a view illustrating the bolts B inserted into the reinforcement hole 133h and the auxiliary coupling hole 134h of each of the reinforcement plates 130 coupled to both sides of the battery module 100 of FIG. 11. (However, for convenience, a detailed structure such as thethread of the bolt B is omitted.)

Referring to FIG. 12, one bolt B is inserted into and coupled to the reinforcement hole 133h of each of the reinforcement ribs 131 formed at the same position in the longitudinal direction d of the reinforcement plate 130.

Further, another bolt B is inserted into and coupled to, in the horizontal direction, the auxiliary coupling hole 134h formed at the end of the reinforcement plate 130.

The battery module 100 of the present disclosure may be fixed to the pack case 200 included in the battery pack by the bolts B inserted into and coupled to the reinforcement hole 133h and the auxiliary coupling hole 134h.

### Battery Pack

The battery pack according to the second aspect of the present disclosure includes the battery module 100 according to the second aspect of the present disclosure and the pack case 200 including the module area A in which the battery module 100 is accommodated.

The pack case 200 according to FIG. 6 may be included in the battery pack according to the second aspect of the present disclosure.

The pack case 200 includes a base plate 210 corresponding to the bottom portion and aside wall 220 perpendicularlycoupled to the base plate 210.

The side wall 220 includes a main side wall 221 perpendicularlycoupled to the base plate 210 at the edge of the base plate 210 and a sub-side wall 222 perpendicularlycoupled to the base plate 210 to cross the center of the base plate 210. Thus, the module area A included in the pack case 200 of the present disclosure may be roughly divided into two parts by the sub-side wall 222, and the battery modules 100 arranged in the one module area A may be arranged side by side between the sub-side wall 222 and the main side wall 221 opposite to the sub-side wall 222 in the longitudinaldirection d2 of the pack case.

A coupling groove 211h may be formed in the lower portion of the base plate 210 so that abolt B may be inserted into and screw-coupled to the coupling groove 211h, and the auxiliary coupling groove 220h may be formed in the side wall 220 so that abolt B may be inserted into and screw-coupled to the auxiliary coupling groove 220h.

Among the plurality of battery modules 100 accommodated in the module area A of the pack case 200, a pair of battery modules 100 arranged adjacent to each other are coupled to each other by the reinforcement plates 130. In more detail, among the pair of battery modules 100 arranged adjacent to the module area A of the pack case 200, the first reinforcement plate 130a included in one battery module 100 is coupled to the second reinforcement plate 130b of the other battery module 100.

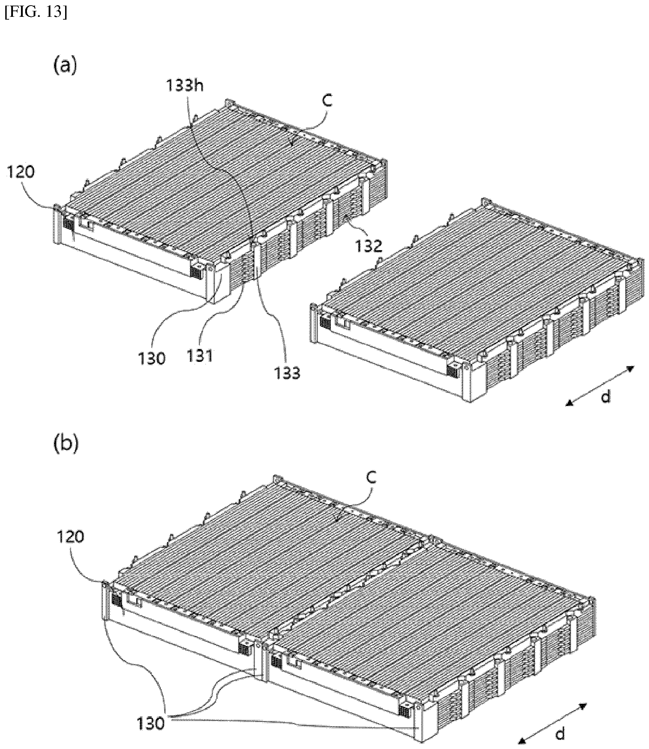

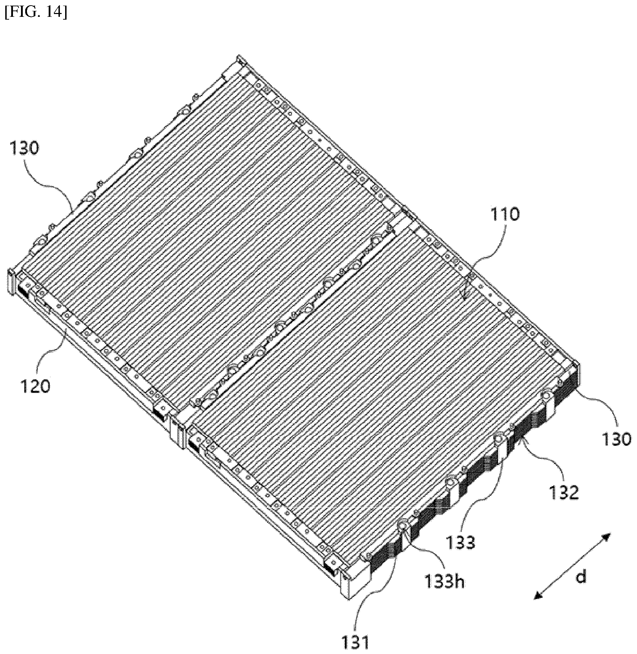

In FIG. 13, (a) is a perspective view of a pair of battery modules 100 arranged adjacent to each other, (b) of FIG. 13 is a perspective view ofthe pair of coupled battery modules 100, and FIG. 14 is a view illustrating the pair of battery modules 100 illustrated in (b) of FIG. 13 from a different angle.

According to FIGS. 13 and14, the pair of battery modules 100 arranged adjacent to each other in the module area A of the pack case 200 are arranged such that the reinforcement ribs 131 and the reinforcement bars 133 of one battery module 100 face the reinforcement grooves 132 of the other battery module 100.

In detail, one battery module 100 among the adjacent battery modules 100 is disposed such that the first reinforcement plate 130a provided on one side of the one battery module 100 faces the second reinforcement plate 130b provided on one side of the other battery module 100.

The pair of battery modules 100 arranged as illustrated in (a) of FIG. 13 are coupled to each other as the reinforcement ribs 131 and the reinforcement bars 133 provided on one side of the one battery module 100 are engaged with and inserted into the reinforcement grooves 132 provided on one side of the other facing battery module 100. Thus, aplurality of battery modules 100 coupled as illustrated in (b) of FIG. 13 may be inserted into the module area A of the pack case 200.

As illustrated in (b) of FIG. 13 and FIG. 14, the reinforcement ribs 131 between the pair of coupled battery modules 100 are engaged with and coupled to the corresponding reinforcement grooves 132 to form a strip shape extending in the longitudinal direction d of the reinforcement plate 130. That is, the reinforcement rib 131 formed on one side of one battery module 100 is inserted into the reinforcement groove 132 formed on one side of the other coupled battery module 100, so that the opposing reinforcement ribs 131 and reinforcement plates 130 are pressed and supported. Thus, a side surface of the cell stack included in each battery module 100 may be supported by the reinforcement ribs 131 that form one stripshape by coupling the first reinforcement plate 130a and the second reinforcement plate 130b.

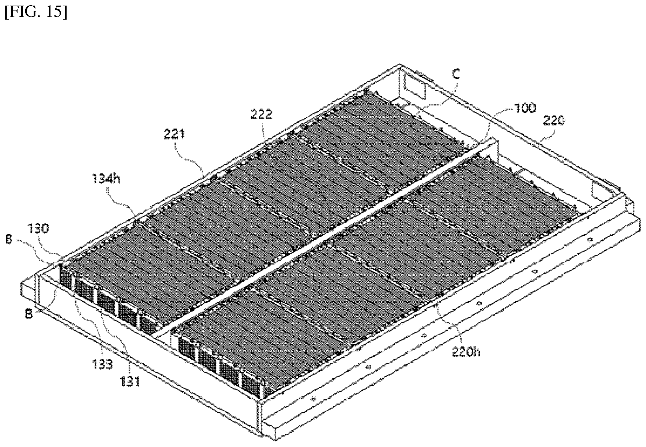

FIG. 15 is a view illustrating the battery pack according to the second aspect in which the battery module 100 is accommodated in the module area A of the pack case 200.

The plurality of battery modules 100 are accommodated in the module area A so that the reinforcement holes 133h formed in the reinforcement bars 133 of the reinforcement plate 130 correspond to the coupling grooves 211h of the base plate 210 illustrated in FIG. 6. In this case, the battery module 100 may be fixedly coupled to the base plate 210 by the bolt B that perpendicularly passes through the reinforcement hole 133h and is inserted into the coupling groove 211h. The bolts B may allow the battery module 100 to be screw-coupled to positions where the reinforcement bars 133 are formed along the side surface thereof while spaced a predetermined distance from each other, and the side surface of the battery module 100 may be supported by the perpendicularly extending reinforcement bars 133 and the bolts B inserted into the reinforcement bars 133. The bolt B inserted into the reinforcement hole 133h allows the reinforcement plates 130 coupled to both sides of the battery module 100 to be fixed to the base plate 210. Thus, even when gas is generated inside any one battery module 100, the swelling phenomenon in which the battery module 100 expands may be suppressed by the reinforcement bars 133 screw-coupled with the bolts B coupled to the base plate 210 and the reinforcement plate 130 including the reinforcement bars 133.

The battery module 100 may be accommodated in the module area A such that the auxiliary coupling hole 134h of the reinforcement plate 130 corresponds to the auxiliary coupling groove 220h of the side wall 220 illustrated in FIG. 6. In this case, the battery module 100 may be fixedly coupled to the side wall 220 by the bolt B that horizontally passes through the auxiliary coupling hole 134h and is inserted into the auxiliary coupling groove 220h. Thus, each battery module 100 accommodated in the module area A of the pack case 200 may be fixedly coupled to and supported by the side wall 220 as well as the base plate 210 by the reinforcement plate 130.

The battery pack of the present disclosure may further include anupper cover (not illustrated) coupled to the pack case 200 to cover anupper portion of each battery module 100 accommodated in the module area A of the pack case 200.

Since the upper cover corresponds to widely-known technology, a more detailed description thereof will be omitted.

Hereinabove, the present disclosure has been described in more detail through the drawings, the aspects, and the like. However, since configurations described in the drawings or the aspects described in the present specification are merely aspects of the present disclosure and do not represent all the technical spirit of the present disclosure, it should be understood that there may be various equivalents and variations that may replace the configurations are present at the time of filing the present application.

### [Description of Reference Numerals]

10: (Related art) Battery module
11: (Related art) Module frame
12: (Related art) End plate
20: (Related art) Pack case
21: (Related art) Base plate
22: (Related art) Side wall
23: (Related art) Partition wall
100: Battery module
110: Module frame
120: End plate
130: Reinforcement plate
130a: First reinforcement plate
130b: Second reinforcement plate
131, 131': Reinforcement ribs.
131h: Through hole
132: Reinforcement groove
133: Reinforcement bar
133h: Reinforcement hole
134: Protrusion
134h: Auxiliary coupling hole
200: Pack case
210: Base plate
211h: Coupling groove
220: Side wall
220h: Auxiliary coupling groove
221: Main side wall
222: Sub-side wall
A: Module area
B: Bolt
C: Cell stack
d: Longitudinal direction of reinforcement plate
d2: Longitudinal direction of pack case

## Claims

1. A battery module including a cell stack in which a plurality of cells are stacked, the battery module comprising:
a pair of reinforcement plates coupled to opposite sides of the battery module and configured to support side surfaces of the battery module,
wherein each of the pair of reinforcement plates includes a plurality of reinforcement ribs protruding and extending in a longitudinal direction of a reinforcement plate of the pair of reinforcement plates.

2. The battery module of claim 1, wherein the plurality of reinforcement ribs are spaced a predetermined distance from each other in the longitudinal direction of the reinforcement plate.

3. The battery module of claim 2, wherein the reinforcement plate includes a reinforcement groove having a recessed shape and provided between a pair of reinforcement ribs of the plurality of reinforcement ribs spaced apart from each other in the longitudinal direction of the reinforcement plate.

4. The battery module of claim 3, wherein a shape of the reinforcement groove corresponds to a shape of a reinforcement rib of the plurality of reinforcement ribs such that the reinforcement rib is engaged with and inserted into the reinforcement groove.

5. The battery module of claim 4, wherein the reinforcement rib and the reinforcement groove are alternately provided in the longitudinal direction of the reinforcement plate.

6. The battery module of claim 1, wherein the reinforcement rib has at least one of a trapezoidal shape and a parabolic shape.

7. The battery module of claim 1, wherein the plurality of reinforcement ribs are spaced a predetermined distance from each other in a height direction of the reinforcement plate.

8. The battery module of claim 7, wherein the plurality of reinforcement plates include:
a first reinforcement plate provided on one side of the battery module; and
a second reinforcement plate provided on another side of the battery module, and
wherein the plurality of reinforcement ribs included in the first reinforcement plate and the second reinforcement plate are formed at a same height in the height direction of the plurality of reinforcement plates.

9. The battery module of claim 1, wherein the reinforcement plate includes a through hole perforated to perpendicularly pass through a reinforcement rib of the plurality of reinforcement ribs.

10. The battery module of claim 1, wherein the reinforcement plate further includes a reinforcement bar extending perpendicularly through a reinforcement rib of the plurality of reinforcement ribs.

11. The battery module of claim 10, wherein the reinforcement bar includes a reinforcement hole perforated so that a bolt perpendicularly passes through the reinforcement hole.

12. A battery pack comprising:
the battery module of claim 1; and
a pack case including a module area in which the battery module is accommodated,
wherein the plurality of reinforcement plates include:
a first reinforcement plate provided on one side of the battery module; and
a second reinforcement plate provided on another side of the battery module, and wherein the first reinforcement plate of one battery module among a pair of battery modules adjacent in the module area of the pack case is coupled to the second reinforcement plate of another battery module among the pair of battery modules.

13. The battery pack of claim 12, wherein the plurality of reinforcement ribs are spaced a predetermined distance from each other in the longitudinal direction of the reinforcement plate,
wherein the reinforcement plate includes a reinforcement groove having a recessed shape and provided between a pair of reinforcement ribs among the plurality of reinforcement ribs spaced apart from each other in the longitudinal direction of the reinforcement plate,
wherein the reinforcement rib and the reinforcement groove are alternately provided in the longitudinal direction of the reinforcement plate, and
wherein the reinforcement rib included in the first reinforcement plate of the one battery module among the pair of battery modules is inserted into and engaged with the reinforcement groove included in the second reinforcement plate of the another battery module.

14. The battery pack of claim 12, wherein the reinforcement plate further includes a reinforcement bar extending perpendicularly through the reinforcement rib,
wherein the reinforcement bar includes a reinforcement hole perforated such that a bolt perpendicularly passes through the reinforcement hole,
wherein the pack case includes a coupling groove formed at a bottom of the module area to correspond to a position of the reinforcement hole, and
wherein the battery module is coupled to the pack case by the bolt passing through the reinforcement hole and inserted into the coupling groove.

15. The battery pack of claim 12, wherein the reinforcement plate includes a through hole perforated to perpendicularly pass through the reinforcement rib,
wherein the pack case includes a coupling groove formed at a bottom of the module area to correspond to a position of the through hole, and
wherein the battery module is coupled to the pack case by a bolt passing through the through hole and inserted into the coupling groove.

16. The battery pack of claim 12, wherein the pack case includes:
a base plate corresponding to a bottom portion; and
a side wall perpendicularly coupled to an end of the base plate and extending along an edge of the base plate,
wherein the reinforcement plate includes an auxiliary coupling hole at opposite ends thereof, the auxiliary coupling hole being perforated such that a bolt passes through in a horizontal direction,
wherein the side wall includes an auxiliary coupling groove formed to correspond to a position of the auxiliary coupling hole of the battery module disposed in the module area, and
wherein the battery module is coupled to the pack case by a bolt passing through the auxiliary coupling hole and inserted into the auxiliary coupling groove.
